# EUROPÄISCHE PATENTSCHRIFT

(11) **EP 1 032 511 B1**
(45) Veröffentlichungstag und Bekanntmachung des Hinweises auf die Patenterteilung: **31.10.2001**
(21) Anmeldenummer: 98961158.7
(22) Anmeldetag: 09.11.1998
(51) Int. Cl.: B60Q 1/26, F21S 8/10

(54) **KRAFTFAHRZEUGLEUCHTE**
MOTOR VEHICLE LIGHT
PHARE DE VEHICULE AUTOMOBILE

(30) Priorität: 29.11.1997 DE 19753096
(43) Veröffentlichungstag der Anmeldung: 06.09.2000
(73) Patentinhaber: Volkswagen Aktiengesellschaft, 38436 Wolfsburg (DE)
(72) Erfinder: MÜLLER, Michael, D-38518 Gifhorn (DE)
(86) Internationale Anmeldenummer: EP9807130
(87) Internationale Veröffentlichungsnummer: WO9928152

(56) Entgegenhaltungen:
- DE-A- 3 916 875
- DE-A- 4 206 959
- GB-A- 2 139 340
- PATENT ABSTRACTS OF JAPAN vol. 016, no. 171 (P-1343), 24. April 1992 & JP 04 015685 A (MITSUBISHI ELECTRIC CORP), 21. Januar 1992
- PATENT ABSTRACTS OF JAPAN vol. 098, no. 005, 30. April 1998 & JP 10 024766 A (KOITO MFG CO LTD), 27. Januar 1998

## Beschreibung

Die Erfindung betrifft eine Kraftfahrzeugleuchte mit wenigstens einer Funktionsfläche, wobei als Lichtquellen der Kraftfahrzeugleuchte Leuchtdioden einer einheitlichen Farbgebung vorgesehen sind.

Aus der Deutschen Offenlegungsschrift DE 33 15 785 A1 ist eine Kraftfahrzeugleuchte bekannt, bei der als Lichtquellen weiße oder transparente 3-Phasen-Leuchtdioden mit wenigstens zwei verschiedenen Leuchtfarben für verschiedene Leucht- und/oder Signalfunktionen, welche entsprechend der gewünschten Signalfarbe durch unterschiedliche Spannungsbeaufschlagung ansteuerbar sind. Nachteilig bei einer derartigen Kraftfahrzeugleuchte ist jedoch, daß eine Regelung erforderlich ist, mittels derer durch unterschiedliche Spannungsbeaufschlagung unterschiedliche Leucht- oder Signalfunktionen realisiert werden können. Zusätzlich dazu müssen verschiedene Teile des Gesamtleuchtenfeldes getrennt ansteuerbar sein, damit spezielle Leuchtfarben und/oder Signalfarben-Leuchtstärken erzeugbar sind.

Aus der Deutschen Offenlegungsschrift DE 39 16 875 A1 ist eine gattungsgemässe Signalleuchte insbesondere eine Mehrkammersignalleuchte für Kraftfahrzeuge bekannt. Die Signalleuchte weist mehrere Funktionsfelder auf, auf denen Leuchtdioden unterschiedlicher Farbgebung vorgesehen sind. So sind in dem Feld, das dem Fahrtrichtungsanzeiger entspricht, nur gelbe Leuchtdioden, in dem Feld das dem Schluß- oder Bremslicht entspricht nur rote Leuchtdioden und im Bereich des Rückfahrscheinwerfers Leuchtdioden der Farben Rot, Grün und Blau vorgesehen. Aus den Farben Rot, Grün und Blau erhält man durch additive Farbmischung die dem Rückfahrscheinwerfer zugeordnete Farbe Weiß. In ihrem Erscheinungsbild ist die Signalleuchte von herkömmlichen Signalleuchten mit Glühlampen nicht zu unterscheiden. Weiterhin ist jede Funktionsfläche einer einzigen Funktion zugeordnet, so daß bei Betätigung der Bremse beziehungsweise des Fahrtrichtungsanzeigers jeweils nur die Leuchtdioden betätigt werden, welche dem jeweiligen Funktionsfeld zugeordnet sind. Die Leuchtdioden der jeweils anderen Funktionsfelder bleiben ungenutzt.

Weitere Signalleuchten mit Leuchtdioden unterschiedlicher Farbgebung sind aus den Deutschen Offenlegungsschriften DE 39 30 214 A1 und DE 42 28 895 A1 bekannt. Bei den dort beschriebenen Signalleuchten werden Leuchtdioden unterschiedlicher Farbgebung kombiniert, um insbesondere auch weißes Licht für den Rückfahrscheinwerfer zu realisieren. Besondere Anregungen zum Aufbau der Beleuchtungseinrichtung sind diesen Schriften nicht zu entnehmen.

Der Erfindung liegt die Aufgabe zugrunde eine möglichst kostengünstige und einfach aufgebaute Kraftfahrzeugleuchte mit Leuchtdioden zu schaffen.

Die Aufgabe wird erfindungsgemäß durch die Merkmale des Anspruchs 1 gelöst.

Die Kraftfahrzeugleuchte kann beispielsweise über die gesamte Fläche verteilte rote Leuchtdioden aufweisen, die einer Schlußlichtfunktion zugeordnet sind und wenigstens eine als Teilfläche innerhalb der gesamten Fläche ausgebildete Funktionsfläche aufweisen, welche zur Kenntlichtmachung unterschiedlicher Fahrzeugbetriebszustände, zum Beispiel Bremsvorgänge, über eine Anzahl zusätzlicher roter Leuchtdioden verfügt. Auf diese Art und Weise ist es möglich, eine Kraftfahrzeugleuchte mit Leuchtdioden mit zwei unterschiedlichen Funktionen möglichst kostengünstig auszubilden. Die der Schlußlichtfunktion zugeordneten roten Leuchtdioden werden somit auch für die Bremslichtfunktion genutzt. Auf diese Weise wird die Anzahl der roten Leuchtdioden minimiert.

Ferner wird das Erscheinungsbild der Leuchte in vorteilhafter Weise verbessert, das heißt, das Bremslicht leuchtet als Teilfläche des Schlußlichtes und bewirkt somit einen dreidimensionalen Effekt. Außerdem wird es dadurch ermöglicht auf den nicht für das Bremslicht verwendeten Flächen des Schlußlichtes zusätzliche Funktionsflächen vorzusehen. Auf diesen weiteren Funktionsflächen können dann Leuchtdioden anderer Farbe vorgesehen werden. Mittels dieser Leuchtdioden anderer Farbe können dann durch additive Farbmischung mit den roten Leuchtdioden des Schlußlichtes weitere Signalfarben erzeugt werden. So ist nach der Deutschen Offenlegungsschrift DE 3916875A1 bekannt, daß durch Vermischung von rotem und grünem Licht die Farbe Gelb erreicht werden kann. Somit kann durch Vorsehen von zusätzlichen grünen LED's auf einer Funktionsfläche der Fahrtrichtungsanzeiger realisiert werden.

Zusätzlich ist es möglich auf einer weiteren Funktionsfläche blaue und grüne Leuchtdioden zu ergänzen, so daß durch die additive Farbmischung weißes Licht für den Rückfahrscheinwerfer erreichbar ist.

Leuchtdioden emitieren ein sehr monochromatisch und gerichtetes Licht. Zur Erschaffung eines harmonischen Erscheinungsbildes der Kfz-Leuchte kann die vorteilhafterweise mit einer Diffuseroptik abgedeckt werden.

Wird nur das Schlußlicht betätigt, so leuchtet die gesamte Kraftfahrzeugleuchte homogen rot. Bei Betätigen von zusätzlichen Funktionen, wie zum Beispiel der Bremse oder des Fahrtrichtungsanzeigers oder des Rückwärtsganges, leuchten dann aus der homogen leuchtenden Kraftfahrzeugleuchte durch Betätigen der zusätzlichen Leuchtdioden das Bremslicht, der Fahrtrichtungsanzeiger oder der Rückfahrscheinwerfer mit einem 3-dimensionalen Effekt, da diese zusätzlichen Funktionen aufgrund der zusätzlichen Leuchtdioden eine erhöhte Leuchtintensität aufweisen.

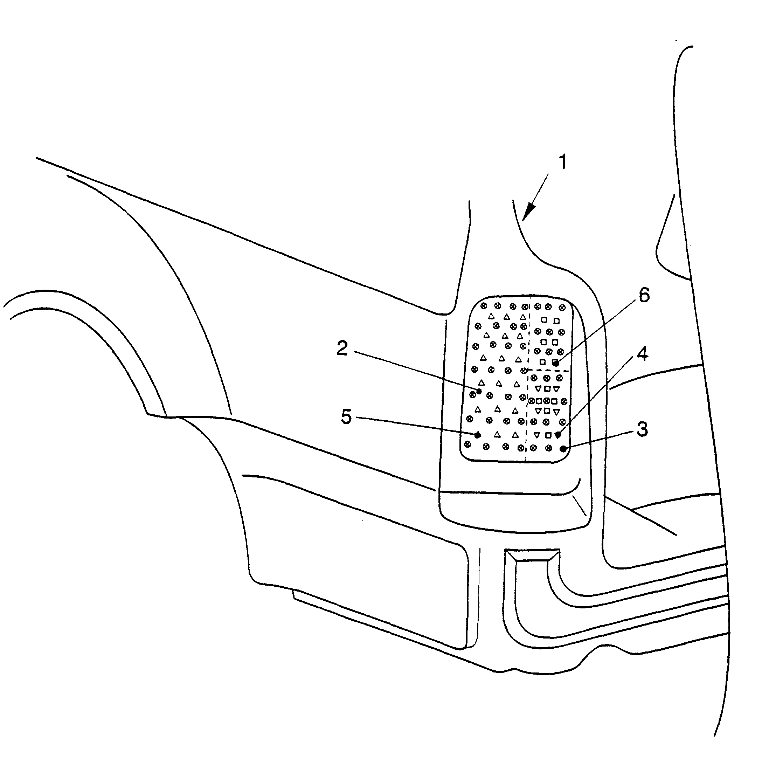

Die Erfindung wird nachfolgend anhand eines Ausführungsbeispiels näher erläutert. Die einzige Figur zeigt:
- Figur:: Kraftfahrzeugleuchte mit darin angeordneten Leuchtdioden.

In der Figur ist eine Kraftfahrzeugleuchte 2 angeordnet in einem Kraftfahrzeug 1 zu erkennen. Die Kraftfahrzeugleuchte 2 weist über ihre gesamte Fläche rote Leuchtdioden 3 auf. Bei Betätigen des Schlußlichtes leuchten die roten Leuchtdioden 3 auf und verleihen der Kraftfahrzeugleuchte 2 somit ein harmonisch rotes Erscheinungsbild.

Zusätzlich weist die Kraftfahrzeugleuchte 2 rote Leuchtdioden 5 auf einer als Teilfläche innerhalb der gesamten Fläche ausgebildeten Funktionsfläche zur Kenntlichmachung unterschiedlicher Fahrzeugbetriebszustände auf. Denkbar wäre hier beispielsweise die Realisierung des Bremslichtes mittels der zusätzlichen Leuchtdioden oder beispielsweise in den USA auch das Blinklicht.

Mittels der roten Leuchtdioden 5 wird somit eine Fläche erhöhter Leuchtintensität geschaffen. Wird bei angeschaltetem Schlußlicht die Bremse betätigt, so leuchtet das Bremslicht aus dem Schlußlicht heraus und bewirkt dadurch einen dreidimensionalen Effekt. In vorteilhafter Weise werden hier die bereits leuchtenden roten Leuchtdioden 3 genutzt, um die geforderte Leuchtintensität für das Bremslicht zu erreichen. Zusätzlich sind auf der Kraftfahrzeugleuchte 2 grüne Leuchtdioden 6 vorgesehen. Durch die grünen Leuchtdioden 6 und die roten Leuchtdioden 3 erhält man durch additive Farbmischung gelbes Licht. Der Rückfahrscheinwerfer ist in vorteilhafter Weise dadurch geschaffen, daß in einem Bereich des Fahrtrichtungsanzeigers oder in einem gesonderten Bereich zusätzlich blaue Leuchtdioden 4 vorgesehen sind, wobei dann durch additive Farbmischung der blauen 4, grünen 6 und roten 3 Leuchtdioden weißes Licht erzeugbar ist. Denkbar wäre es beispielsweise den Rückfahrscheinwerfer und den Fahrtrichungsanzeiger auf einer Fläche gemeinsam vorzusehen, wobei dann der Fahrtrichtungsanzeiger durch Betätigten der grünen Leuchtdioden 6 und der Rückfahrscheinwerfer durch Betätigten der grünen 6 und der blauen 7 Leuchtdioden zusätzlich zu den bereits vorhandenen roten Leuchtdioden 3 realisierbar wäre. Denkbar wäre allerdings auch zwei getrennte Funktionsfelder vorzusehen, wobei in diesem Fall weniger blaue Leuchtdioden 7 vorgesehen werden müßten, da diese lediglich für den Rückfahrscheinwerfer vorzusehen sind. Über die Wahl der Leuchtdioden sei hier nur auf das Buch "Bauelemente der Optik" von Normann/Schröder, 5. überarbeitete Auflage, erschienen im Karl Hansa Verlag 1987, Seite 37-41, hingewiesen. Leuchtdioden mit den demnach berechneten Wellenlängen können ohne weiteres im Handel beschafft werden.

## Patentansprüche

1. Kraftfahrzeugleuchte (2) mit wenigstens einer Funktionsfläche, **dadruch gekennzeichnet**, daß die Kraftfahrzeugleuchte (2) über ihre gesamte Fläche verteilte Leuchtdioden (3) einer einheitlilchen Farbe zur Kenntlichmachung eines ersten Fahrzeugbetriebszustands aufweist, und daß wenigstens eine als Teilfläche innerhalb der gesamten Fläche ausgebildete Funktionsfläche zur Kenntlichmachung unterschiedlicher Fahrzeugbetriebszustände über eine Anzahl zusätzlicher Leuchtdioden (5) der gleichen Farbe verfügt.

2. Kraftfahrzeugleuchte nach einem der vorangegangenen Ansprüche, **dadurch gekennzeichnet, daß** auf weiteren Funktionsflächen Leuchtdioden (4; 6) anderer Farbe zusätzlich vorgesehen sind.

3. Kraftfahrzeugleuchte nach einem der vorangegangenen Ansprüche, **dadurch gekennzeichnet, daß** die Kraftfahrzeugleuchte (2) eine Lichtaustrittsöffnung aufweist und die Lichtaustrittsöffnung mit einer Diffusoroptik abgedeckt ist.

4. Kraftfahrzeugleuchte nach einem der vorangegangenen Ansprüche, **dadurch gekennzeichnet, daß** die Kraftfahrzeugleuchte (2) über die gesamte Fläche verteilte rote Leuchtdioden (3) aufweist, wobei die roten Leuchtdioden einer gemeinsamen Funktion zugeordnet sind und die Kraftfahrzeugleuchte (2) in weitere Funktionsflächen unterteilt ist, auf denen zusätzlich LED's (4; 6) unterschiedlicher Farbgebung vorgesehen sind, wobei bei Betätigung der zusätzlichen LED's durch additive Farbmischung der zusätzlichen LED's und der roten LED's zusätzliche Signalfarben erzeugbar sind.

## Claims

1. Motor vehicle light (2) having at least one functional surface, **characterised in that** the motor vehicle light (2) comprises light-emitting diodes (3), which are distributed over its entire surface, of a uniform colour for the purpose of indicating a first vehicle operating state, and that at least one functional surface which is formed as a partial surface within the entire surface comprises a number of additional light-emitting diodes (5) of the same colour for the purpose of indicating different vehicle operating states.

2. Motor vehicle light according to any one of the preceding claims [sic], **characterised in that** light-emitting diodes (4; 6) of a different colour are additionally provided on further functional surfaces.

3. Motor vehicle light according to any one of the preceding claims, **characterised in that** the motor vehicle light (2) comprises a light outlet orifice and the light outlet orifice is covered with diffuser optics.

4. Motor vehicle light according to any one of the preceding claims, **characterised in that** the motor vehicle light (2) comprises red light-emitting diodes (3) which are distributed over the entire surface, wherein the red light-emitting diodes are allocated to a common function and the motor vehicle light (2) is subdivided into further functional surfaces, on which LEDs (4; 6) of different colouration are additionally provided, wherein upon actuation of the additional LEDs it is possible to generate additional signal colours by a process of additively colour-mixing the additional LEDs and the red LEDs.

## Revendications

1. Phare de véhicule automobile (2) comportant au moins une surface fonctionnelle, **caractérisé en ce que** le phare de véhicule automobile (2) comporte des diodes luminescentes (3) d'une couleur uniforme qui sont réparties sur toute sa surface et qui sont destinées à rendre visible un premier état de fonctionnement du véhicule et **en ce qu'**au moins une surface fonctionnelle conçue comme surface partielle à l'intérieur de la surface globale dispose d'un certain nombre de diodes luminescentes (5) supplémentaires de la même couleur pour rendre visibles différents états de fonctionnement du véhicule.

2. Phare de véhicule automobile selon la revendication précédente, **caractérisé en ce que** des diodes luminescentes d'une autre couleur (4 ; 6) sont prévues en plus sur d'autres surfaces fonctionnelles.

3. Phare de véhicule automobile selon l'une des revendications précédentes, **caractérisé en ce que** le phare de véhicule automobile (2) comporte une ouverture de sortie de lumière et **en ce que** l'ouverture de sortie de lumière est recouverte avec une optique de diffusion.

4. Phare de véhicule automobile selon l'une des revendications précédentes, **caractérisé en ce que** le phare de véhicule automobile (2) comporte des diodes luminescentes rouges (3) réparties sur toute sa surface, les diodes luminescentes rouges étant associées à une fonction commune, et **en ce que** le phare de véhicule automobile (2) est divisé en d'autres surfaces fonctionnelles sur lesquelles des LED de différentes couleurs (4 ; 6) sont prévues en plus, des couleurs de signalisation supplémentaires pouvant être produites par le mélange additionnel des couleurs des LED supplémentaires et des LED rouges lors de l'actionnement des LED supplémentaires.
